# EUROPÄISCHE PATENTSCHRIFT

(11) **EP 4 147 893 B1**
(45) Veröffentlichungstag und Bekanntmachung des Hinweises auf die Patenterteilung: **09.10.2024**
(21) Anmeldenummer: 22181017.9
(22) Anmeldetag: 24.06.2022
(51) Int. Cl.: B60J 5/04, B60J 10/86

(54) **SCHWENKSCHIEBETÜR MIT KLAPPBARER TÜRDICHTUNG UND FAHRZEUG**
PIVOTING SLIDING DOOR WITH FOLDABLE DOOR SEAL AND VEHICLE
PORTE COULISSANTE PIVOTANTE À JOINT PLIANT D'ÉTANCHÉITÉ DE PORTE ET VÉHICULE

(30) Priorität: 08.09.2021 DE 102021123269
(43) Veröffentlichungstag der Anmeldung: 15.03.2023
(73) Patentinhaber: Bode - Die Tür GmbH, 34123 Kassel (DE)
(72) Erfinder: Theis, Christoph, 34537 Bad Wildungen DE (DE)
(74) Vertreter: Patentanwälte Bauer Vorberg Kayser

(56) Entgegenhaltungen:
- WO-A1-2010/039286
- DE-A1- 19 927 239
- US-A1- 2019 291 555

## Beschreibung

Die Erfindung betrifft eine Schwenkschiebetür gemäß dem Oberbegriff von Patentanspruch 1. Die Erfindung betrifft ferner ein Fahrzeug mit einer solchen Schwenkschiebetür gemäß Patentanspruch 6.

Schwenkschiebetüren finden regelmäßig Einsatz als Fahrgasttür für Fahrzeuge des öffentlichen Personenverkehrs, insbesondere für Busse und Bahnen. Schwenkschiebetüren zeichnen sich dadurch aus, dass diese sich in einem ersten Verfahrabschnitt quer zur Fahrzeuglängsachse aus dem Türportal herausbewegen (auch als Hub bezeichnet) und anschließend in einem zweiten Verfahrabschnitt eine Längsverschiebung des Türflügels parallel zur Außenwand in Längsrichtung des Fahrzeugs erfolgt.

Eine solche Schwenkschiebetür kann als einflüglige oder zweiflügelige Fahrgasttür ausgebildet sein, also ein oder zwei Türflügel aufweisen.

Schwenkschiebetüren weisen häufig an den Seiten Dichtungen auf. Bei Schwenkschiebetüren, welche an ihrer Unterseite eine Türdichtung aufweisen, kann es dazu kommen, dass die Türdichtung beim Öffnen der Schwenkschiebetür auf einen Bahnsteig oder einen Bussteig aufsetzt. Dies ist insbesondere dann der Fall, wenn ein Bus oder eine Bahn sehr nah an einen Bussteig oder Bahnsteig heranfährt und der Abstand zwischen Fahrzeug und Steig kleiner ist als die Weglänge des ersten Verfahrabschnittes (Hub). Das Aufsetzen der Türdichtung kann zu Beschädigungen der Türdichtung und daraus folgend zu Undichtigkeiten führen.

Aus WO 2010/039286 A1 ist eine Schiebetür mit einer klappbaren Schürzendichtung bekannt.

Es ist die zugrundeliegende Aufgabe der Erfindung, eine Schwenkschiebetür und ein Fahrzeug zur Verfügung zu stellen, die gerade bei dem der Schwenkschiebetür zugrundliegenden Öffnungsverlauf eine möglichst lange Haltbarkeit der Türdichtung ermöglicht.

Die Lösung der Aufgabe erfolgt erfindungsgemäß mit den Merkmalen der unabhängigen Ansprüche. Weitere praktische Ausführungsformen und Vorteile sind in Zusammenhang mit den abhängigen Ansprüchen beschrieben.

Eine erfindungsgemäße Schwenkschiebetür für ein Fahrzeug weist mindestens einen Türflügel zum Öffnen und Verschließen einer Türöffnung auf. Wie vorstehend bereits erläutert, bewegt sich der mindestens eine Türflügel zwischen der geöffneten Stellung und der verschlossenen Stellung in einem ersten Verfahrabschnitt in einer Richtung quer zur Türfläche und in einem zweiten Verfahrabschnitt in einer Richtung in der Ebene bzw. parallel zur Türfläche. Der Türflügel vollzieht also einen Hub und eine Längsbewegung.

An einer Seite des Türflügels ist eine Türdichtung angeordnet. Es handelt sich bei der Türdichtung insbesondere um eine außenliegende Türdichtung, die dazu geeignet ist gegen die Fahrzeugaußenhaut abzudichten. Insbesondere handelt es sich bei der Türdichtung um eine untere Türdichtung, die an einer Unterseite des Türflügels angeordnet ist.

Erfindungsgemäß ist die Türdichtung derart klappbar, dass die Türdichtung in geöffnetem Zustand des Türflügels eine eingeklappte Stellung aufweist, wobei ein Teil der Türdichtung in einer Richtung quer zur Türfläche geklappt ist. Die Türdichtung weist in geschlossenem Zustand des Türflügels eine ausgeklappte Stellung auf. Um eine zuverlässige Klappbarkeit auch über einen längeren Zeitintervall zu gewährleisten, weist die Türdichtung zur Realisierung der Klappbarkeit eine Feder auf. Die Türdichtung ist dabei als Hohlprofil ausgebildet, welches einen Hohlraum umschließt und in dem Hohlraum ist die Feder angeordnet. Durch die Federkraft wird die Türdichtung insbesondere in den einklappten Zustand verschwenkt. Das heißt mit anderem Worten, die Feder erzeugt derart eine Vorspannung auf die Türdichtung, dass die Türdichtung die eingeklappte Stellung einnimmt. Beim Schließen der Schwenkschiebetür wird die Türdichtung gegen ein Widerlager, insbesondere eine Trittleiste, gefahren. Das Andrücken an das Widerlager wirkt der Federkraft entgegen und übersteigt diese betragsmäßig, so dass ein Ausklappen der Türdichtung bewirkt wird. Die Feder ist dabei so in dem Hohlraum angeordnet, dass sie wie vorstehend beschrieben, ein Verschwenken der Türdichtung in den einklappten Zustand bewirkt.

Die eingeklappte Stellung bedeutet dabei, dass ein an dem Türflügel angeordnetes Ende der Türdichtung und ein von dem Türflügel entferntes Ende der Türdichtung einen kleineren Winkel einschließen als in der ausgeklappten Stellung. Insbesondere können die beiden Enden in der eingeklappten Stellung einen Winkel zwischen 10° und 30° und bevorzugt 20° einschließen. Die Türdichtung klappt in geöffnetem Zustand des Türflügels zum Fahrzeug hin. Insbesondere sollen hierunter keine Türdichtungen verstanden werden, die über ihre gesamte Länge um eine Lagerung im Türflügel verschwenkbar sind.

Die Türdichtung ist derart elastisch verformbar, dass die zwischen der eingeklappten und ausgeklappten Stellung beweglich ist. Insbesondere ist die Türdichtung aus einem Gummi.

Die Klappbarkeit der Türdichtung hat den Vorteil, dass die Dichtung in geöffnetem Zustand der Schwenkschiebetür derart abgeklappt ist, dass sie ein Hindernis und insbesondere im Falle einer unteren Türdichtung, eine Bahnsteigkante oder Bussteigkante nicht berührt, auch wenn die Bahn bzw. der Zug nah an dem Steig ist. So werden Beschädigungen an der Türdichtung vermieden und eine längere Haltbarkeit der Türdichtung realisiert. Wie vorstehend beschrieben, ist diese Klappbarkeit der Türdichtung insbesondere bei Schwenkschiebetüren wichtig, die einen Hub ausführen.

Durch die erfindungsgemäße Lösung muss zudem keine Anpassung der Höhe der Schwenkschiebetür bzw. der Türdichtung erfolgen, sodass diese oberhalb des Steiges liegt. Eine Höhenanpassung wäre nachteilig, da die Türdichtung üblicherweise im geschlossenen Zustand an einer Trittleiste anliegt. Würde nun die Türdichtung in größerer Höhe angeordnet bzw. die vertikale Position angepasst, so müsste auch die Trittleiste weiter oben angeordnet sein. Dies kann aber zu unerwünscht großen Stufenhöhen zwischen dem Steig und der Trittleiste führen und ist entsprechend unerwünscht.

In einer praktischen Ausführungsform der erfindungsgemäßen Schwenkschiebetür ist die Feder in die Türdichtung integriert. Die Feder befindet sich nicht außen an der Türdichtung, sondern ist innerhalb der Türdichtung angeordnet und dort vor Verschmutzungen und Abrasion geschützt.

Besonders kostengünstig kann die Feder als Blattfeder ausgebildet sein. Die Blattfeder besteht aus einem Metallstreifen mit rechteckigem Querschnitt. Die Blattfeder kann ein Profil sein, welches als Bogen verspannt ist.

Insbesondere verläuft die Blattfeder in einem Bogen umgekehrt zum Knick der Gummidichtung. Ein Schenkel der Blattfeder liegt dabei an einem Widerlager der Türdichtung an und der zweite Schenkel an einer Angriffsfläche, an welcher durch Aufspreizung der Blattfeder ein Abklappen bzw. Verlagern des unteren Endes der Türdichtung bewirkt wird.

Das Verwenden einer Blattfeder stellt dabei eine besonders einfache und kostengünstige Ausführungsform dar. Alternativ wäre auch eine Spiralfeder denkbar, welche sich zwischen einem Widerlager und einer Angriffsfläche erstreckt und so ein Klappen der Türdichtung bewirkt.

In einer weiteren praktischen Ausführungsform weist die Türdichtung einen elastischen Abschnitt auf. Der elastische Abschnitt ist insbesondere an einer der Knickstelle gegenüberliegenden Seite der Türdichtung angeordnet. Insbesondere ist der elastische Abschnitt als Falte ausgebildet, wobei in ausgeklappten Zustand der Türdichtung zwei Lagen der Türdichtung übereinander liegen und in eingeklappten Zustand der Türdichtung die beiden Lagen auseinandergezogen sind.

Die Erfindung betrifft auch ein Fahrzeug, insbesondere ein Fahrzeug des öffentlichen Personenverkehrs, insbesondere ein Bus oder eine Bahn mit einer wie vorstehend beschriebenen Schwenkschiebetür. Wie vorstehend bereits beschrieben, vollzieht die Schwenkschiebetür beim Öffnen einen Hub, in welchem sich die Schwenkschiebetür in Querrichtung von dem Fahrzeug wegbewegt. In dieser geöffneten Stellung ist die Türdichtung in Richtung des Fahrzeuges, in einer dem Hub entgegengesetzten Richtung abgeklappt. Insbesondere kommt eine untere Türdichtung dann nicht in Kontakt mit einem Bahnsteig oder Bussteig.

Unterhalb der Schwenkschiebetür ist insbesondere eine Trittleiste angeordnet, wobei die Trittleiste als Anschlagfläche für die klappbare Türdichtung dient. In geschlossenem Zustand der Schwenkschiebetür, liegt die Türdichtung, eine untere Türdichtung, an der Trittleiste an, die ein Ausklappen der Türdichtung bewirkt. Wenn eine Feder vorgesehen ist, dann spannt die Feder die Türdichtung gegen die Trittfläche vor. Öffnet die Schwenkschiebetür und vollzieht einen Hub, so klappt die Feder ein.

Weitere praktische Ausführungsformen und Vorteile sind im Folgenden in Zusammenhang mit den Figuren erläutert. Es zeigen:
- Fig. 1: eine Schwenkschiebetür mit einem davor angeordneten Steig in einer perspektivischen Ansicht von schräg seitlich,
- Fig. 2: einen Ausschnitt einer erfindungsgemäßen Schwenkschiebetür mit einer klappbaren Türdichtung in einem Querschnitt in einem geschlossenen Zustand der Schwenkschiebetür, und

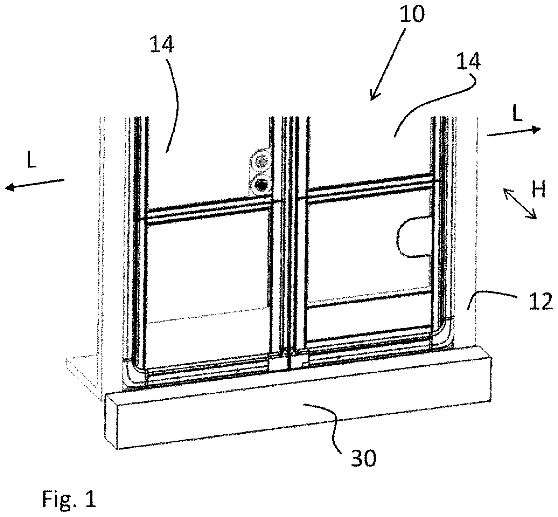

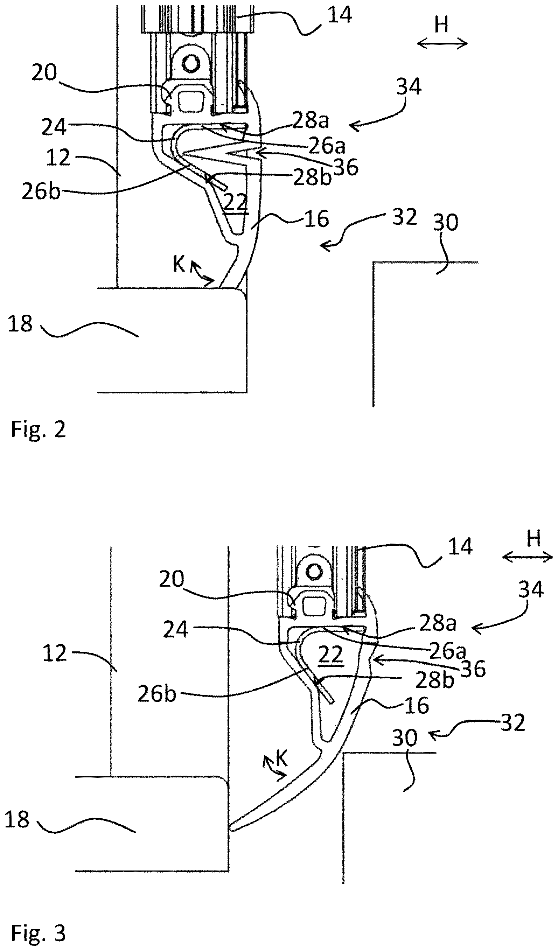

- Fig. 2: den Ausschnitt aus Fig. 1 in einem geöffneten Zustand der Schwenkschiebetür.

In Fig. 1 ist eine Schwenkschiebetür 10 mit zwei Türflügeln 14 dargestellt, wobei die Schwenkschiebetür an einem Fahrzeug 12 angeordnet ist. In Fig. 1 ist die Schwenkschiebetür 10 in einem geschlossenen Zustand gezeigt. Zum Öffnen vollziehen die Türflügel 14 der Schwenkschiebetür 12 zunächst einen Hub H quer zum Fahrzeug 12 und bewegen sich dann jeweils in Längsrichtung L parallel zum Fahrzeug 12.

Vor einem unteren Abschnitt der Schwenkschiebetür 10 ist ein Steig 30 dargestellt, der zum Beispiel Teil eines Bahnsteiges sein kann.

In Fig. 2 ist ein unterer Abschnitt eines Türflügels 14 dargestellt. An der Unterseite des Türflügels 14 ist eine untere Türdichtung 16 angeordnet. Unterhalb der Schwenkschiebetür 10 ist ferner eine Trittleiste 18 an dem Fahrzeug 12 angeordnet. Die Befestigung der unteren Türdichtung 16 an dem Türflügel 14 erfolgt in bekannter Art und Weise über eine T-förmige Dichtlippe 20.

Die untere Türdichtung 16 ist als Hohlprofil ausgebildet und weist einen Hohlraum 22 auf. In dem Hohlraum 22 ist eine Blattfeder 24 angeordnet, wobei ein erster Schenkel 26a der Blattfeder 24 an einer zu dem Türflügel 14 weisenden Widerlagerfläche 28a anliegt. Ein zweiter Schenkel 26b der Blattfeder 24 liegt an einer Angriffsfläche 28b an, wobei die Angriffsfläche 28b der Widerlagerfläche 28a gegenüberliegt, aber schräg zur Widerlagerfläche 28a ausgerichtet ist.

Die Wirkung der Blattfeder 24 wird im Folgenden erläutert.

In Fig. 2 ist die Schwenkschiebetür 10 in einem geschlossenen Zustand gezeigt. Der Türflügel 14 liegt am Fahrzeug 12 an. Zum Öffnen bewegt sich der Türflügel 14 in einem ersten Verfahrabschnitt in eine Richtung quer zum Fahrzeug 12. Der Türflügel 14 bewegt sich hier in eine Richtung H und vollzieht einen sogenannten Hub.

Wenn das Fahrzeug 12 nah an einen Steig 30 heranfährt und der Abstand zwischen dem Fahrzeug 12 und dem Steig 30 kleiner ist als die Weglänge des ersten Verfahrabschnittes (Hub), so kann es im Stand der Technik zu einer Kollision der Türdichtung 14 mit dem Steig 30 kommen.

Durch die Vorspannung der Blattfeder 24 wird beim Öffnen des Türflügels 14 ein Abklappen der unteren Türdichtung 16 in Richtung des Fahrzeuges 12 bewirkt. Wie in dem geöffneten Zustand des Türflügels in Fig. 3 erkennbar ist, klappt die Türdichtung 16 derart ein, dass sie nicht mit dem Steig 30 kollidiert.

Dabei klappt jeweils nur ein unteres Ende 32 der Türdichtung 16 gegenüber einem Befestigungsabschnitt 34 in einer Klapprichtung K. Das untere Ende 32 ist dabei senkrecht zur Türfläche abgeklappt. Die Klappbarkeit des unteren Endes 32 der Türdichtung 16 erfolgt hier um eine Knickstelle, der in einem mittleren Abschnitt der Türdichtung 16 angeordnet ist.

In dem einklappten Zustand der Türdichtung 16 (Fig. 3) schließen das untere Ende 32 der Türdichtung 16 und der Befestigungsabschnitt 34 der Türdichtung 16 einen kleineren Winkel ein als im ausgeklappten Zustand (Fig. 2).

Die Türdichtung 16 weist einen elastischen Abschnitt 36 in Form einer Falte auf. In dem ausgeklappten Zustand der Türdichtung 16 in Fig. 2, liegen zwei Lagen der Türdichtung 16 übereinander. In dem eingeklappten Zustand in Fig. 3 sind die beiden Lagen auseinandergefaltet und die Länge der Türdichtung 16 ist auf der der Knickstelle gegenüberliegenden Seite vergrößert.

Wenn der Türflügel 14 wieder von der geöffneten Stellung in Fig. 3 in die geschlossene Stellung gemäß Fig. 2 verfährt, so stößt die untere Türdichtung 16 im eingeklappten Zustand an die Trittleiste 18 an und wird durch die Kraft, die der Federkraft entgegenwirkt wieder in den ausgeklappten Zustand versetzt.

### Bezugszeichenliste

- 10: Schwenkschiebetür
- 12: Fahrzeug
- 14: Türflügel
- 16: Türdichtung
- 18: Trittleiste
- 20: Dichtlippe
- 22: Hohlraum
- 24: Feder, Blattfeder
- 26a: erster Schenkel
- 26b: zweiter Schenkel
- 28a: Widerlagerfläche
- 28b: Angriffsfläche
- 30: Steig
- 32: unteres Ende
- 34: Befestigungsabschnitt
- 36: elastischer Abschnitt, Falte

- H: Hubrichtung
- K: Klapprichtung

## Patentansprüche

1. Schwenkschiebetür für ein Fahrzeug (12), wobei die Schwenkschiebetür (10) mindestens einen Türflügel (14) zum Öffnen und Verschließen einer Türöffnung aufweist, wobei an einer Seite des Türflügels (14) eine Türdichtung (16) angeordnet ist,
wobei die Türdichtung (16) derart klappbar ist, dass die Türdichtung (16) in geöffnetem Zustand des Türflügels (14) eine eingeklappte Stellung aufweist, in welcher die Türdichtung (16) mit einem Teil (32) in einer Richtung quer zur Türfläche verschwenkt ist und dass die Türdichtung (16) in geschlossenem Zustand des Türflügels (14) eine ausgeklappte Stellung aufweist, wobei die Türdichtung (16) zur Realisierung der Klappbarkeit eine Feder (24) aufweist, **dadurch gekennzeichnet, dass**
die Türdichtung (16) als Hohlprofil ausgebildet ist, welches einen Hohlraum (22) umschließt und wobei in dem Hohlraum (22) die Feder (24) angeordnet ist.

2. Schwenkschiebetür nach dem vorstehenden Anspruch,
**dadurch gekennzeichnet, dass**
die Feder (24) in die Türdichtung (16) integriert ist.

3. Schwenkschiebetür nach einem der zwei vorstehenden Ansprüche,
**dadurch gekennzeichnet, dass**
es sich bei der Feder um eine Blattfeder (24) handelt.

4. Schwenkschiebetür nach einem der vorstehenden Ansprüche, **dadurch gekennzeichnet, dass** die Türdichtung (16) einen elastischen Abschnitt (36) aufweist.

5. Fahrzeug mit einer Schwenkschiebetür (10) nach einem der vorstehenden Ansprüche 1 bis 4.

6. Fahrzeug nach dem vorstehenden Anspruch,
**dadurch gekennzeichnet, dass**
unterhalb der Schwenkschiebetür (10) eine Trittleiste (18) angeordnet ist und wobei die Trittleiste (18) eine Anschlagfläche für die klappbare Türdichtung (16) aufweist.

## Claims

1. A swing and slide door for a vehicle (12), wherein the swing and slide door (10) has at least one door leaf (14) for opening and closing a doorway, wherein a door seal (16) is arranged on one side of the door leaf (14), wherein the door seal (16) can be folded in such a way that the door seal (16) has a folded-in position in the open state of the door leaf (14), in which a portion (32) of the door seal (16) is swiveled in a direction transverse to the door surface, and that the door seal (16) has a folded-out position in the closed state of the door leaf (14), wherein the door seal (16) has a spring (24) for realizing foldability, **characterized in that** the door seal (16) is designed as a hollow profile, which envelops a cavity (22), and wherein the spring (24) is arranged in the cavity (22).

2. The swing and slide door according to the preceding claim, **characterized in that**
the spring (24) is integrated into the door seal (16).

3. The swing and slide door according to one of the two preceding claims, **characterized in that**
the spring is a leaf spring (24).

4. The swing and slide door according to one of the preceding claims, **characterized in that** the door seal (16) has an elastic section (36).

5. A vehicle with a swing and slide door (10) according to one of the preceding claims 1 to 4.

6. The vehicle according to the preceding claim,
**characterized in that**
a tread strip (18) is arranged under the swing and slide door (10), and wherein the tread strip (18) has a stop surface for the foldable door seal (16).

## Revendications

1. Porte pivotante coulissante, destinée à un véhicule (12), la porte pivotante coulissante (10) comportant au moins un battant de porte (14) pour ouvrir et fermer une ouverture de porte, sur un côté du battant de porte (14) étant placé un joint de porte (16),
le joint de porte (16) étant rabattable de telle sorte que lorsque le battant de porte (14) est ouvert, le joint de porte (16) présente une position rabattue, dans laquelle le joint de porte (16) est pivoté par une partie (32) dans une direction à la transversale de la surface de la porte et que lorsque le battant de porte (14) est fermé, le joint de porte (16) présente une position déployée, pour réaliser l'aptitude au rabattement, le joint de porte (16) comportant un ressort (24),
**caractérisée**
**en ce que** le joint de porte (16) est conçu sous la forme d'un profilé creux, lequel entoure une cavité (22) et dans la cavité (22) étant placé le ressort (24).

2. Porte pivotante coulissante selon la revendication précédente, **caractérisée**
**en ce que** le ressort (24) est intégré dans le joint de porte (16).

3. Porte pivotante coulissante selon l'une quelconque des deux revendications précédentes,
**caractérisée**
**en ce que** le ressort est un ressort à lame (24).

4. Porte pivotante coulissante selon l'une quelconque des revendications précédentes, **caractérisée en ce que** le joint de porte (16) comporte une portion (36) élastique.

5. Véhicule, pourvu d'une porte pivotante coulissante (10) selon l'une quelconque des revendications 1 bis 4 précédentes.

6. Véhicule selon la revendication précédente,
**caractérisé**
**en ce qu'**en-dessous de la porte pivotante coulissante (10) est placée une barre de seuil (18) et la barre de seuil (18) comportant une surface de butée pour le joint de porte (16) rabattable.
